# EUROPÄISCHE PATENTSCHRIFT

(11) **EP 3 604 801 B1**
(45) Veröffentlichungstag und Bekanntmachung des Hinweises auf die Patenterteilung: **22.09.2021**
(21) Anmeldenummer: 19189726.3
(22) Anmeldetag: 02.08.2019
(51) Int. Cl.: F03D 13/40, F03D 80/00, F03D 13/20

(54) **SCRUTON-SPIRALE**
SCRUTON SPIRAL
HÉLICE SCRUTON

(30) Priorität: 03.08.2018 DE 202018003615 U
(43) Veröffentlichungstag der Anmeldung: 05.02.2020
(73) Patentinhaber: Jensen, Christin, 24991 Großsolt (DE)
(72) Erfinder: Jensen, Christin, 24991 Großsolt (DE)
(74) Vertreter: Philipp, Matthias

(56) Entgegenhaltungen:
- EP-A1- 3 029 313
- WO-A1-2018/083054
- DE-U1-202010 002 845
- KR-A- 20110 045 711
- US-A1- 2016 312 761

## Beschreibung

Die vorliegende Erfindung betrifft eine Vorrichtung zum Schutz von Windturbinentürmen gegen windinduzierte Schwingungen und Vibrationen, die insbesondere im spiralförmig angebrachten Zustand auch als Scruton-Spirale bezeichnet wird.

Windturbinen werden zur Erzeugung elektrischer Energie verwendet. Dazu wandeln Rotorblätter kinetische Windenergie in eine Rotationsbewegung um, die dann weiter in elektrische Energie umgewandelt wird. Die Rotorblätter sind dazu an einer Gondel befestigt, die wiederum auf einem Turm positioniert ist. Der Turm kann dabei aus einem oder mehreren Turmsegmenten bestehen. Prinzipbedingt werden Windturbinen an Orten aufgestellt, an denen starke Winde herrschen. Dabei unterscheidet man Offshore-Anlagen, die auf dem Meer gebaut werden, und Onshore-Anlagen, die an Land gebaut werden.

Die Türme oder Turmsegmente der Windturbinen müssen für die Montage an den gewünschten Standort der Windturbine transportiert werden. Während des Transports und der Montage sind die Türme oder Turmsegmente anfällig für windinduzierte Schwingungen und Vibrationen. Es kann vorkommen, dass der Wind die Türme oder Turmsegmente in ihrer Eigenfrequenz anregt, sodass die Vibrationen/Schwingungen sich immer weiter verstärken und so eine Montage der Türme oder Turmsegmente unmöglich wird oder es sogar zu einem Kippen der Türme oder Turmsegmente kommt. Insbesondere bei Offshore-Anlagen ist es üblich, dass die Türme bereits in einer senkrechten Position, in der sie besonders anfällig für windinduzierte Vibrationen/Schwingungen sind, zum Montageort transportiert werden. Entsprechend sind die Türme oder Turmsegmente während des Transports durch eine windstarke Region hier besonders anfällig.

Aus der EP 2 851 490 B1 ist bekannt, Strakensätze über die Türme oder Turmsegmente zu spannen, um die Strömung entlang des Turms so zu homogenisieren, dass Vibrationen und Schwingungen verhindert werden.

Außerdem ist aus der DE 20 2017 100 334 U1 bekannt, Klettverschlusssysteme und EPDM-Rutschmatten in Manschetten für Rotorblätter an einer Windturbinenanlage zu verwenden.

WO2018/083054A1 offenbart ein weiteres Beispiel aus dem Stand der Technik.

Aus dem Stand der Technik ergeben sich verschiedenste Probleme. Wie die EP 2 851 490 B1 beschreibt, können die dort offenbarten Straken der Strakensätze vom Wind von ihrer ursprünglichen Auflagenseite auf dem Windturbinenturm auf eine andere Seite gekippt werden. So kann es zu einer ungewollten Verdrehung der Strakensätze kommen. Dies verursacht ungenaue Positionen der Straken auf dem Turm und kann ebenfalls ungewünschte Kräfte auf den Turm verursachen. Außerdem gestaltet sich die Montage der Strakensätze als schwierig, da sie beim Spannen leicht in axialer und Umfangsrichtung verrutschen können und in windigen Umgebungen bereits im ungespannten Zustand Wind fangen können, was eine Montage der Straken auf dem Turm nahezu unmöglich macht. Ausgehend vom beschriebenen Stand der Technik ergibt sich für die vorliegende Erfindung die Aufgabe, eine Vorrichtung bereitzustellen, die windinduzierte Schwingungen und Vibrationen an Windturbinentürmen verhindert und dennoch einfach und sicher zu montieren ist und einen sicheren Halt der Vorrichtung auf dem Windturbinenturm gewährleistet.

Die Aufgabe wird erfindungsgemäß durch einen Windbrecher zum Reduzieren von windinduzierten Vibrationen oder Schwingungen beim Transport oder Aufstellen eines Turms oder Turmsegments von Windturbinen nach Anspruch 1 gelöst. Dabei weist der Windbrecher eine Unterkonstruktion oder Spanneinrichtung auf, die gegen eine Oberfläche eines Turms oder Turmsegments spannbar ist und eine Auflageseite mit einer Auflagefläche zum Aufliegen auf der Oberfläche des Turms oder Turmsegments und eine der Auflageseite gegenüberliegende Außenseite hat. Weiterhin weist der Windbrecher zumindest ein Windwiderstandselement zum Beeinflussen einer Windströmung an dem Turm oder Turmsegment auf. Dabei ist der Windbrecher dadurch gekennzeichnet, dass das Windwiderstandselement mit der Außenseite der Unterkonstruktion in Kontakt bringbar ist und mit der Unterkonstruktion verbindbar, insbesondere werkzeuglos verbindbar ist.

Der erfindungsgemäße Windbrecher gewährleistet eine Vermeidung oder Reduzierung von windinduzierten Vibrationen oder Schwingungen beim Aufstellen oder Transportieren von Windturbinen. Gleichzeitig bietet die Spanneinrichtung einen festen und sicheren Sitz des Windbrechers auf dem Turm oder Turmsegment der Windturbine. Außerdem ist der erfindungsgemäße Windbrecher besonders einfach und effizient montierbar und demontierbar.

Die Auflagefläche des Windbrechers kann einen hohen Reibungskoeffizienten zu der Oberfläche des Turms oder Turmsegments aufweisen.

Dazu kann die Auflageseite im Bereich der Auflagefläche aus Kunststoff, Gummi, Silikon und/oder Ethylen-Propylen-Dien- Kautschuk (EPDM) bestehen.

Um einen sicheren Halt des Windbrechers auf dem Turmsegment oder Turm der Windturbinen zu gewährleisten, ist ein hoher Reibungskoeffizient µ zwischen der Auflagefläche der Außenseite der Unterkonstruktion und der Oberfläche des Turms oder Turmsegments vorteilhaft. Ethylen-Propylen-Dien-Kautschuk (EPDM) stellt dabei ein besonders vorteilhaftes Material dar, da es eine hohe Elastizität mit einem hohen Reibungskoeffizienten verbindet.

Der Haftreibungskoeffizient zwischen der Auflagefläche der Unterkonstruktion und der Oberfläche des Turmsegments oder Turms liegt bevorzugt mindestens bei µ = 1,5, weiterhin bevorzugt mindestens bei µ = 1,8, weiterhin bevorzugt mindestens bei µ = 2, weiterhin bevorzugt mindestens bei µ = 3. Die Normalkraft, die die Unterkonstruktion gegen den Turm oder das Turmsegment drückt, wird dabei durch das Verspannen der Unterkonstruktion hervorgerufen. Dies geschieht dadurch, dass die Unterkonstruktion spiralförmig um den Turm oder das Turmsegment gewickelt ist und am oberen und unteren Ende auf Zug beansprucht wird, sodass die Unterkonstruktion zur axialen Achse (Mitte) des Turms hin zusammengezogen wird und dabei gegen die Oberfläche des Turms oder Turmsegments gedrückt wird, oder dass in die Unterkonstruktion eingebettete Spannelemente wie Seile oder Gurte gespannt werden und die Unterkonstruktion gegen den Turm andrücken.

Das Windwiderstandselement ist lösbar, insbesondere werkzeuglos lösbar mit der Unterkonstruktion verbindbar.

Dazu kann das Windwiderstandselement eine Haftfläche aufweisen, mittels der das Windwiderstandselement in Kontakt mit der Außenseite der Unterkonstruktion bringbar ist und mit der Unterkonstruktion verbindbar ist.

Das Windwiderstandselement kann kraftschlüssig und/oder formschlüssig mit der Unterkonstruktion verbindbar sein.

Dazu kann die Unterkonstruktion erste Haltemittel aufweisen und das Windwiderstandselement kann zweite Haltemittel aufweisen. Dabei können die zweiten Haltemittel und die ersten Haltemittel miteinander in Eingriff bringbar sein, sodass eine lösbare Verbindung zwischen dem Windwiderstandselement und der Unterkonstruktion entsteht.

Bevorzugt sind die ersten Haltemittel eine Seite einer Velcro- oder Klettverschlussverbindung oder einer Reißverschlussverbindung und die zweiten Haltemittel die korrespondierende Gegenseite einer Velcro- oder Klettverschlussverbindung oder einer Reißverschlussverbindung.

Weiter bevorzugt sind die ersten Haltemittel Teil der Außenseite der Unterkonstruktion und die zweiten Haltemittel werden von der Haftfläche des Windwiderstandselements gebildet.

Die Möglichkeit, die Unterkonstruktion oder Spanneinrichtung und die Windwiderstandselemente einfach und schnell miteinander verbinden zu können bietet in der Praxis erhebliche Vorteile. Zum einen ist ein einfacher und platzsparender Transport des Windbrechers möglich, wenn dieser sich noch nicht auf einem Turm oder Turmsegment befindet, zum anderen lässt sich die Unterkonstruktion einfacher auf den Turm oder das Turmsegment spannen, wenn die Windwiderstandselemente noch nicht auf dem Turmsegment befestigt sind. Es kommt vor, dass ein Windbrecher außerhalb einer Halle (also im Wind) auf einem Turm oder Turmsegment montiert werden muss. In diesem Fall ist es besonders schwierig ein zusammenhängendes Gebilde aus Windwiderstandselement(en) und Unterkonstruktion auf dem Turm oder Turmsegment zu montieren, da der Windwiderstand der zu verspannenden Komponenten bereits sehr hoch ist. Zum Abbau, Weitertransport oder zur Wiederverwendung des Windbrechers ist es außerdem vorteilhaft, wenn die Windwiderstandselemente und die Unterkonstruktion ohne weiteres wieder voneinander lösbar sind.

Dem Fachmann sind lösbare Verbindungen wie Reißverschlüsse und Klettverschlussverbindungen bekannt, mit denen besonders einfach montierbare und lösbare Verbindungen hergestellt werden können. Diese Verbindungen sind außerdem ohne Werkzeug montierbar und lösbar. Bei einer Klettverschlussverbindung können Klettverschlussbahnen als Haftfläche auf einer Unterseite eines Windwiderstandselements vorgesehen werden und korrespondierende Klettverschlussbahnen auf der Außenseite der Unterkonstruktion. Werden die Flächen bei der Montage der Windwiderstandselemente auf der Unterkonstruktion aufeinander gedrückt, so verbinden sich die Klettverschlussbahnen selbsttätig miteinander. Es können auch andere Haltemittel verwendet werden, um eine lösbare Verbindung zu erzeugen. So sind zum Beispiel formschlüssigen Verbindungen wie Ösen-Haken-Verbindungen, Magnetverbindungen, Reißverschlussverbindungen und Seil-Ösen-/Haken-Verbindungen oder kraftschlüssige Verbindungen, wie Schraubverbindungen Klemmverbindungen, denkbar. Auch nicht lösbare Verbindungen mittels Nieten oder Klebe- oder Schweißverbindungen sind möglich.

Die Unterkonstruktion kann außerdem ein darauf aufgelegtes oder darin eingebettetes Spannmittel umfassen, mit dem die Unterkonstruktion entlang ihrer Längsrichtung auf Zug beanspruchbar ist, um die Auflagefläche gegen die Oberfläche des Turms oder Turmsegments zu pressen.

Bevorzugt ist das Spannmittel ein Seil oder Spanngurt, oder umfasst zwei oder mehr beabstandete Spannelemente.

Das Anbringen der Unterkonstruktion kann auf verschiedene Weise erfolgen. Die Unterkonstruktion kann über die gesamte Länge oder nur über Abschnitte des Turms oder Turmsegments gespannt sein.

Zumindest an einem Ende des Turms oder Turmsegments kann eine Zugeinrichtung oder Aufstelleinrichtung vorgesehen ist. An dem anderen Ende des Turms oder Turmsegments kann eine weitere Zugeinrichtung oder eine Halterung vorgesehen sein. Die Unterkonstruktion oder das Spannmittel wird also zwischen einer Zugeinrichtung oder Aufstelleinrichtung und einer weiteren Zugeinrichtung oder Halterung gespannt. Überspannt die Unterkonstruktion den Turm oder das Turmsegment entlang seiner axialen Richtung nur abschnittsweise, kann eine Zugeinrichtung oder Halterung auch an anderer Stelle (als einem Ende) des Turms oder Turmsegments angeordnet sein.

Als Spannmittel können zum Beispiel Gurte oder Seile dienen. Dabei kann die Zugkraft, die von der Zugeinrichtung oder Aufstelleinrichtung mittels der Unterkonstruktion oder das Spannmittel auf die Halterung oder Zugeinrichtung am anderen Ende der Unterkonstruktion übertragen wird, vollständig oder teilweise mittels des Spannmittels oder der Unterkonstruktion übertragen werden. In diesem Fall können die Spannmittel über die gesamte Länge der Unterkonstruktion verlaufen. Die Spannmittel können an einem Ende mit der Zugeinrichtung oder Aufstelleinrichtung verbunden sein, verlaufen im Inneren der Unterkonstruktion und sind am anderen Ende mit der Halterung oder Zugeinrichtung verbunden. Alternativ können Spannmittel jeweils an den Endbereichen der Unterkonstruktion befestigt sein. D. h. sie verlaufen nicht über die gesamte Länge durch die Unterkonstruktion. In diesem Fall wird die Zugkraft in wesentlichen Abschnitten entlang der Längsrichtung der Unterkonstruktion nicht von den Spannmitteln übertragen, sondern durch die Unterkonstruktion (zum Beispiel eine oder mehrere Folienlagen). Bevorzugt verteilt sich die Zugspannung in diesem Fall über die volle Breite oder über einen Teil der Breite der Unterkonstruktion.

Das Spannmittel kann über die gesamte Länge der Spanneinrichtung verlaufen und in einer Unterkonstruktion in der Spanneinrichtung längsbewegbar geführt sein, so dass das Spannmittel zugkraftmäßig von der Unterkonstruktion entkoppelt ist und nicht unmittelbar mit einer Oberfläche eines Turms in Kontakt kommt.

Die Spannmittelaufnahme kann zumindest teilweise aus PTFE (Polytetrafluorethylen) bestehen oder an einer Innenfläche, die mit dem Spannmittel in Kontakt kommt, mit PTFE beschichten sein.

Dazu kann die Unterkonstruktion aus zumindest drei Lagen bestehen, wobei zumindest zwei der Lagen PTFE (Polytetrafluorethylen) aufweisen und zumindest eine Lage EPDM aufweist.

Alternativ kann die Unterkonstruktion auch zumindest eine Schicht Polyvinylchlorid (PVC) enthalten. In diesem Fall weist die Unterkonstruktion bevorzugt zumindest eine Lage PVC und eine Lage PTFE auf.

Die Unterkonstruktion kann beispielsweise zwei Lagen PTFE bzw. PTFE-beschichtete Materialien oder Fasern aufweisen oder zwei mit Teflon ausgekleidet oder beschichtete Hohlräume aufweisen.

Das Spannmittel kann an einem oder in zwei Endabschnitten der Unterkonstruktion befestigt, bevorzugt vernäht, sein.

Das Spannmittel kann auch an einem Endabschnitt oder an beiden Endabschnitten in der Unterkonstruktion befestigt sein. Bevorzugt ist das Spannmittel dann an oder in den Endabschnitten der Unterkonstruktion vernäht. Als Endabschnitt gelten dabei die Enden in Längsrichtung der Unterkonstruktion ohne Berücksichtigung der Spannmittel. Bevorzugt erstreckt sich das Spannmittel um maximal 1 m, bevorzugt maximal 50 cm in die Endabschnitte der Unterkonstruktion und überlappt damit, um eine solide Befestigung zu erzielen.

Das Spannmittel kann mindestens zwei Spannelemente wie Seile oder Gurte aufweisen, die parallel und mit Abstand zueinander und parallel zu der Längsrichtung der Unterkonstruktion angeordnet sind.

Die Verwendung von zwei oder mehr parallelen, beabstandeten Spannelementen ermöglicht eine gleichmäßige Kraftaufbringung und einen festen Sitz der Unterkonstruktion auf dem Turm oder Turmsegment. Die Spannelemente können an äußeren Rändern der Unterkonstruktion und ggf. in der Mitte verlaufen. Dies verhindert, dass Wind unter die Unterkonstruktion greifen kann und erhöht den Hebelarm, den die Spannmittel (Gurte oder Seile) gegenüber einer möglichen Drehsachse haben, die um die der Wind den Windbrecher kippen könnte.

Es kann ein Sicherungselement vorgesehen sein, durch das die Enden des Spannmittels oder der Spannelemente geführt oder mit dem sie verbunden sind, um zu verhindern, dass sie in die Unterkonstruktion hineinrutschen.

Ferner kann an mindestens einem Ende der Unterkonstruktion ein Abstandshalter angeordnet sein, um zwei oder mehr parallel angeordnete Spannelemente in einem vorgegebenen Abstand voneinander zu halten. Ein Abstandshalter kann ein starres Element sein, das quer zur Längsrichtung der Unterkonstruktion zwischen den beiden Spannelementen in oder an der Unterkonstruktion an- oder eingenäht ist oder auf sonstige Weise an der Unterkonstruktion befestigt ist. Der Abstandshalter verhindert, dass beim Spannen der Unterkonstruktion, wenn die zwei oder mehr Spannelemente von einem einzigen Zugelement gespannt werden, zueinander gezogen werden.

Der Abstandhalter kann durch ein Rohrelement gebildet sein, das quer zur Längsrichtung der Unterkonstruktion angeordnet ist und mit Enden der Spannelemente verbunden ist. Auf diese Weise wird gleichzeitig verhindert, dass Enden der Spannelemente unbeabsichtigt in Aufnahmen in der Unterkonstruktion gezogen werden, aus denen sie schwierig wieder herauszuziehen sind.

Enden der Spannelemente, die aus einem Endabschnitt der Unterkonstruktion herausragen, können miteinander verbunden sein. Dabei können die Enden der Spannelemente eine Schlaufe bilden, an der eine gemeinsames Anschlusselement für die Zugeinrichtung oder Aufstelleinrichtung vorgesehen sein kann, bspw. ein Ring, Schäkel oder Karabiner.

Alternativ können die Enden der Spannelemente separat bleiben, so dass sie jeweils eine separate Anschlussstelle für eine Zug- oder Aufstelleinrichtung aufweisen. In diesem Fall kann jeder Gurt oder jedes Seil eine eigene Schlaufe bilden. Eine Möglichkeit dafür ist, ein Gurtende oder Seilende um 180° umzuschlagen und mit sich selber zu verbinden, zum Beispiel zu vernähen.

Zusätzlich zu den Spannmitteln kann die Unterkonstruktion ein Abspannmittel umfassen. Mittels des Abspannmittels kann eine Abspannkraft auf die Unterkonstruktion aufbringbar sein. Die Abspannkraft kann der mittels der Spannmittel aufgebrachten Zugkraft in einem Abschnitt der Unterkonstruktion vor oder hinter dem Abspannelement entgegenwirken.

Das Abspannmittel kann eine oder mehrere Schlaufen, Ösen, Haken, Laschen oder Ähnliches aufweisen. Bevorzugt besteht das Abspannmittel zumindest teilweise aus einem vernähbaren Material und ist mit der übrigen Unterkonstruktion zur Befestigung daran vernäht. Bevorzugt besteht das Abspannmittel aus zwei Schlaufen, Ösen, Haken, Laschen oder ähnlichem, die jeweils an gegenüberliegenden Seiten quer zur Längsrichtung der Unterkonstruktion angeordnet sind.

Die Abspannkraft kann z.B. mittels eines Krans aufgebracht werden. Dabei kann das Spannmittel an dem Kran befestigt werden. Die über das Spannmittel auf die Unterkonstruktion aufgebrachte Abspannkraft wirkt zumindest teilweise parallel zu der Zugkraft, die über die Spannmittel aufgebracht wird. So kann ein Kran die Spannmittel zum Beispiel senkrecht nach oben ziehen. Dadurch wird der Zugkraft in der Unterkonstruktion im Abschnitt oberhalb des Abspannmittels entgegengewirkt. So weist der entsprechende Abschnitt der Unterkonstruktion keine Spannung mehr auf und die Spannmittel können an ihrer oberen Befestigungsseite gelöst werden, um den Windbrecher zu demontieren.

Alternativ kann das Abspannmittel auch nach unten oder in eine beliebige andere Richtung, die nicht orthogonal zur Turmoberfläche ist, gezogen werden.

Das Abspannmittel kann lang genug ausführt sein, um über ein Windwiderstandselement geführt zu werden. Dies ermöglicht eine einfache Demontage des gesamten Windbrechers, ohne die Windwiderstandselemente entfernen zu müssen. Dazu können z.B. zwei Laschen, die auf beiden Seiten des Windwiderstandselements angeordnet sind über dem Windwiderstandselement zusammengeführt werden und in einen gemeinsamen Kranhaken eingehakt werden.

Die Position des Abspannmittels entlang der Längserstreckung hängt von dem verwendeten Spannmittel und den Eigenarten der Windturbine ab. Es kann vorteilhaft sein der nicht entlasteten Seite der Unterkonstruktion viel Platz einzuräumen, da sich in diesem Abschnitt die Spannung/ Zugkraft erhöht. Entsprechend bietet ein längerer, stärker belasteter Abschnitt den Vorteil durch eine höhere Dehnung mehr Spielraum auf der entlasteten Seite zu schaffen. Andererseits ist es Vorteilhaft die Abspannkraft in einem möglichst flachen Winkel zur Turmoberfläche aufzubringen. Gerade bei der Verwendung von Kränen gibt es hier jedoch häufig Einschränkungen im Bauraum. Zum Beispiel kann es möglich sein, dass die Gondel der Windturbine den Platz direkt oberhalb des Turms blockiert. Um dennoch einen flachen Winkel zur Turmoberfläche zu erzeugen, kann es vorteilhaft sein, das Spannmittel weiter unten am Turm vorzusehen, sodass ein weiter vom Turm beabstandeter Kran dennoch eine entsprechend ausgerichtet Kraft aufbringen kann.

Der Windbrecher kann eine Mehrzahl, von Windwiderstandselementen aufweisen. Bevorzugt weist ein Windbrecher zwischen 20 und 40 Windwiderstandselemente auf.

Die Windwiderstandselemente sind bevorzugt in Reihe entlang einer Längsrichtung der Unterkonstruktion mit der Unterkonstruktion verbindbar.

Zwei Windwiderstandselemente, die auf der Unterkonstruktion befestigt sind, können untereinander zum Beispiel durch Klettverschlüsse, Reißverschlüsse, Haken-Ösen-Verbindungen oder Ähnliches verbindbar sein.

Das Windwiderstandselement kann faltbar sein.

Das Windwiderstandelement kann zeltartig aufgebaut sein und zumindest zwei oder drei Wände umfassen. Die Wände können sich entlang einer Längsrichtung des Windwiderstandelements erstrecken. Das Windwiderstandselement kann dabei so auf der Unterkonstruktion positionierbar sein, dass dessen Längsrichtung im Wesentlichen parallel zur Längsrichtung des Spannelements angeordnet ist. Eine der Wände kann flächig mit der Auflagefläche der Unterkonstruktion verbindbar sein.

Das Windwiderstandselement kann im Querschnitt in Längsrichtung des Windwiderstandelements gesehen ein hohles, gleichschenkliges Dreieck bilden.

Zwischen zwei Wänden des Windwiderstandelements kann ein Abstandhalter angeordnet sein.

Das Windwiderstandelement kann aus zumindest zwei Lagen Folie bestehen und zwischen den Folienlagen kann ein Stabilisierungselement angeordnet sein.

Das Stabilisierungselement kann eine Holzplatte, ein Metallblech oder eine Kunststoffplatte sein. Als Folien gelten im Zusammenhang mit der vorliegenden Erfindung alle flexiblen und vernähbaren Materialien, bevorzugt technische Textilien oder LKW-Planen.

Das Stabilisierungselement kann in den Folien eingenäht sein. Auf diese Weise kann die Position des Stabilisierungselements in den Folien festgelegt sein.

Die Windwiderstandselemente sind bevorzugt tunnelförmige Hohlkörper mit einer polygonalen, abgerundeten oder dreieckigen Querschnittsfläche in ihrer Längsrichtung gesehen. Jedes Windwiderstandselement weist mindestens zwei Wände auf, die zeltartig angeordnet sind. Eine die seitlichen Wände verbindende und abschließende Bodenwand kann vorgesehen sein, die im angebrachten Zustand mit der Unterkonstruktion verbunden ist. In einer bevorzugten Ausführungsform kann jede Wand aus zwei Folienlagen bestehen, die jeweils ein Stabilisierungselement einschließen. Ein solches Stabilisierungselement ist bevorzugt ein flacher, ebener, starrer Körper. Entsprechend können Metallbleche, Holzplatten oder Kunststoffplatten als Stabilisierungselement eingesetzt werden. Sämtliche Wände eines Windwiderstandselementes können aus einer zusammenhängenden Folienbahn bzw. mehreren Lagen zusammenhängender Folienbahnen bestehen. In einem solchen Fall sind die unterschiedlichen Wände bevorzugt durch Nähte voneinander getrennt. Auch an den Enden der Windwiderstandselemente in Längsrichtung sind bevorzugt Nähte zwischen den Folienbahnen vorgesehen. So kann verhindert werden, dass die eingeschlossenen Stabilisierungselemente verrutschen können.

Ein oder beide Kopfenden eines oder jedes Windwiderstandselements bzw. dessen stirnseitige Enden können durch jeweils ein Abdeckelement, bspw. durch eine vierte und/oder fünfte Wand, abgeschlossen sein, so dass das Windwiderstandselement einen ein- oder beidseitig geschlossenen Hohlraum umschließt. So kann kein Wind in das Windwiderstandselement greifen.

Alternativ kann ein Windwiderstandselement fortlaufend mit einem benachbarten Windwiderstandselement verbunden sein, so dass kein Abstand dazwischen besteht und kein Wind durch die Kopfenden der Windwiderstandelemente eingreifen kann. Dies kann zum Beispiel durch Klettverschluss- oder Reißverschlussverbindungen zwischen je zwei benachbarten Windwiderstandselementen geschehen.

Weiterhin bevorzugt weist das Windwiderstandselement Klettverschlussbahnen auf der Unterseite auf, mittels derer es auf der Unterkonstruktion befestigbar ist.

Bevorzugt weist das Windwiderstandselement eine Breite von unter einem Meter orthogonal zur Längsrichtung des Windwiderstandselements auf. Weiter bevorzugt ist die Breite geringer als 70 cm, weiter bevorzugt geringer als 50 cm. Die Länge des Windwiderstandselements kann mehr als 80 cm betragen, weiter bevorzugt mehr als 90 cm.

Alternativ zu den beschriebenen Ausführungsformen, kann das Windwiderstandselement vollständig oder teilweise mittels 3D-Druck gefertigt werden.

Der Windbrecher, das Windwiderstandselement und/oder die Unterkonstruktion können wiederverwendbar sein.

Die Unterkonstruktion kann seitliche Überstandsbereiche aufweisen. Die Überstandsbereiche können parallel zur Längsrichtung der Unterkonstruktion verlaufen und an beiden Seiten zu der Längsrichtung der Unterkonstruktion über die Fläche hinaus stehen, die von dem Windwiderstandselement bedeckt ist, wenn das Windwiderstandselement auf der Unterkonstruktion befestigt ist. Weiterhin können die Überstandsbereiche gegen das Windwiderstandselement klappbar sein und über Befestigungsmittel, zum Beispiel Klettverschluss, an dem Windwiderstandselement befestigbar sein.

Durch eine überlappende Befestigung der Unterkonstruktion mit dem Windwiderstandselement mittels der Überstandsbereiche kann verhindert werden, dass der Wind zwischen das Windwiderstandselement und die Unterkonstruktion greifen kann. Auf diese Weise wird die Befestigungssicherheit zwischen Windwiderstandselement und der Unterkonstruktion erhöht.

Die Unterkonstruktion kann ohne Windwiderstandselemente über den Turm oder das Turmsegment spannbar sein. Dabei kann das Windwiderstandselement auf der am Turm oder Turmsegment befestigten Unterkonstruktion befestigbar sein.

Bevorzugt beträgt die Länge eines Windbrechers weniger als 50 m, weiter bevorzugt weniger als 30 m. Die Breite eines Windbrechers kann weniger als 80 cm betragen, bevorzugt weniger als 50 cm. Das Verhältnis aus Länge eines Windbrechers zur Breite eines Windbrechers kann ein Wert zwischen 40 zu 1 und 90 zu 1 sein, weiter bevorzugt zwischen 50 zu 1 und 65 zu 1.

Mittels der Zugeinrichtung kann eine Zugkraft auf das Spannmittel ausgeübt werden, um die Unterkonstruktion zu spannen. Eine solche Zugeinrichtung kann beispielsweise ein Gurtsystem sein, wie es von Rucksackschnallen bekannt ist. Dabei wird ein loses Ende des Gurtes über eine Umlenkschnalle um 180° umgelenkt. Wird nun am anderen Ende des Gurtes gezogen, wird das lose Ende des Gurtes gegen ein Andrückelement gedrückt, sodass der Gurt sich nicht bewegt und die Schnalle die Zugkraft aufnimmt. Wird am losen Ende des Gurtes gezogen, kann der Gurt durch die Schnalle rutschen, weil das lose Ende sich zwischen dem Andrückelement und dem anderen Ende des Gurtes befindet und diese nicht gegeneinander drückt. Dem Fachmann steht hier jedoch eine Vielzahl von Möglichkeiten offen, eine Zugkraft aufzubringen.

Die Unterkonstruktion kann mittels einer Aufstelleinrichtung spannbar sein.

Eine Aufstelleinrichtung, die zum Aufstellen der Türme oder Turmsegmente dient, kann ebenfalls zum Spannen der Unterkonstruktion dienen.

Die Unterkonstruktion eines Windbrechers kann entlang ihrer Längsrichtung in mehrere Abschnitte unterteilbar sein. Die Unterkonstruktionsabschnitte können entlang ihrer Längsrichtung lösbar in Reihe miteinander verbindbar sein.

Die Erfindung betrifft weiterhin ein Windbrechungssystem für Türme oder Turmsegmente von Windturbinen, das eine Mehrzahl von Windbrechern oder Scruton-Spiralen (wie oben beschrieben) aufweist. Bevorzugt weist das Windbrechersystem mindestens drei Windbrecher auf. Die Windbrecher sind dabei äquidistant zueinander und spiralförmig entlang eines Turms oder Turmsegments befestigbar.

Weiterhin betrifft die Erfindung einen Turm oder ein Turmsegment mit einem Windbrechungssystem wie oben beschrieben.

Die Erfindung wird nachfolgend anhand verschiedener Ausführungsbeispiele erläutert, wobei auf eine Zeichnung Bezug genommen wird.
Figur 1 zeigt einen Abschnitt eines erfindungsgemäßen Windbrechers in einer perspektivischen Ansicht;
Figur 2 zeigt einen weiteren Abschnitt eines erfindungsgemäßen Windbrechers;
Figur 3.1 zeigt eine erste Ausführungsform eines Abschnitts einer Unterkonstruktion;
Figur 3.2 zeigt eine zweite Ausführungsform eines Abschnitts einer erfindungsgemäßen Unterkonstruktion;
Figur 4 zeigt eine perspektivische Darstellung eines Abschnitts einer Unterkonstruktion;
Figur 5.1 zeigt eine perspektivische Darstellung eines erfindungsgemäßen Windwiderstandselements;
Figur 5.2 zeigt eine weitere Ansicht des Windwiderstandselements aus Figur 5.1;
Fig. 5.3 zeigt ein Abdeckelement für ein Windwiderstandselement gemäß Figur 5.1;
Figur 6 zeigt eine Seitenansicht eines Abschnitts eines erfindungsgemäßen Windbrechers;
Figur 7 zeigt eine perspektivische Darstellung eines Abschnitts eines erfindungsgemäßen Windbrechers;
Figur 8 zeigt eine perspektivische Darstellung eines Abschnitts einer erfindungsgemäßen Unterkonstruktion;
Figur 9 zeigt eine Querschnittsansicht der Unterkonstruktion aus Figur 8;
Figur 10.1 zeigt eine weitere Ausführungsform der Unterkonstruktion;
Figur 10.2 und 10.3 zeigen Varianten eines Sicherungselements; und
Figur 11 zeigt einen Windturbinenturm mit Windbrechern.

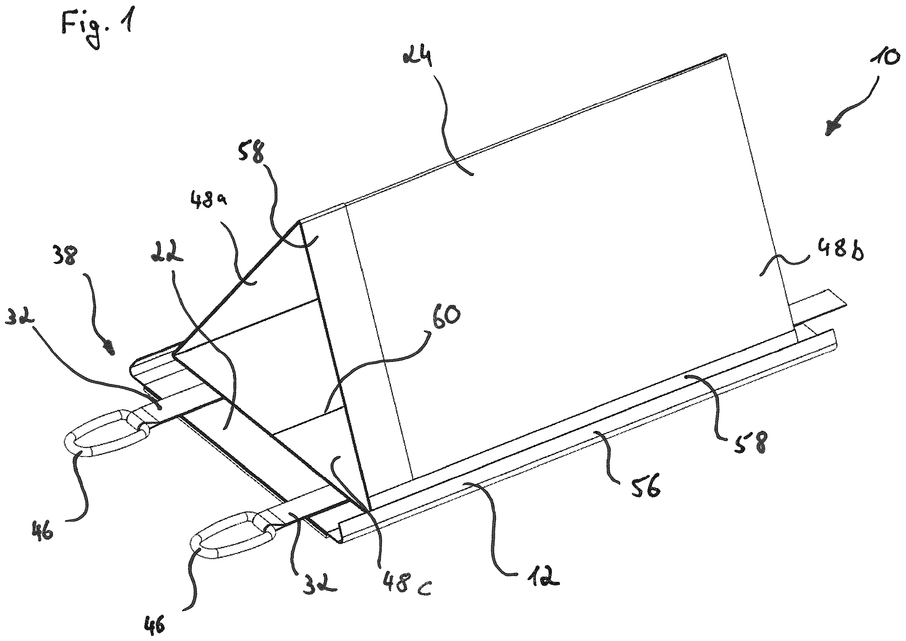

Figur 1 zeigt eine erste Ausführungsform des erfindungsgemäßen Windbrechers 10. Dabei ist nur ein Abschnitt des Windbrechers dargestellt. Im dargestellten Abschnitt des Windbrechers 10 ist ein Windwiderstandselement 24 auf einer Unterkonstruktion 12 montiert. Das Windwiderstandselement 24 weist dabei drei Wände 48a, 48b und 48c auf.

Dabei bilden die Wände 48a, 48b Windangriffsflächen, an denen jeweils Befestigungsmittel 58 vorgesehen sind, um das Windwiderstandselement 24 mit benachbarten Windwiderstandselementen 24 zu verbinden. Die dritte Wand 48c bildet eine Unterseite des Windwiderstandselements 24, mittels derer das Windwiderstandselement 24 auf der Unterkonstruktion 12 befestigt ist. Dazu weist die Wand 48c eine Klettverschlussverbindung mit der Unterkonstruktion 12 auf, die in Figur 1 nicht sichtbar ist. Die untere Wand 48c besteht aus zwei Teilen. Die beiden Wandteile der Wand 48c treffen sich an einer Stoßstelle 60. Die beiden Wandteile der Wand 48c können miteinander verbunden oder verbindbar sein, bevorzugt werden sie jedoch durch die Klettverschlussverbindung mit der Unterkonstruktion 12 in Position gehalten.

In Figur 1 ist der Endabschnitt eines Windbrechers 10 dargestellt. Daher ist auch der Endabschnitt 38 der Unterkonstruktion erkennbar. Aus dem Endabschnitt 38 ragen die Enden des Spannmittels 32. In der dargestellten Ausführungsform weist das Spannmittel 32 zwei Gurte auf. Jedes der beiden Gurtenden des Spannmittels 32 ist separat geführt und weist eine eigene Anschlussstelle 46 auf, über die Zugkräfte auf die Gurte übertragen werden können.

An den seitlichen Rändern der Unterkonstruktion 12 befinden sich Überstandsbereiche 56, die sich seitlich nach oben klappen lassen, um an Befestigungsmittel auf dem Windwiderstandselement zu greifen und so mit diesen verbunden zu werden.

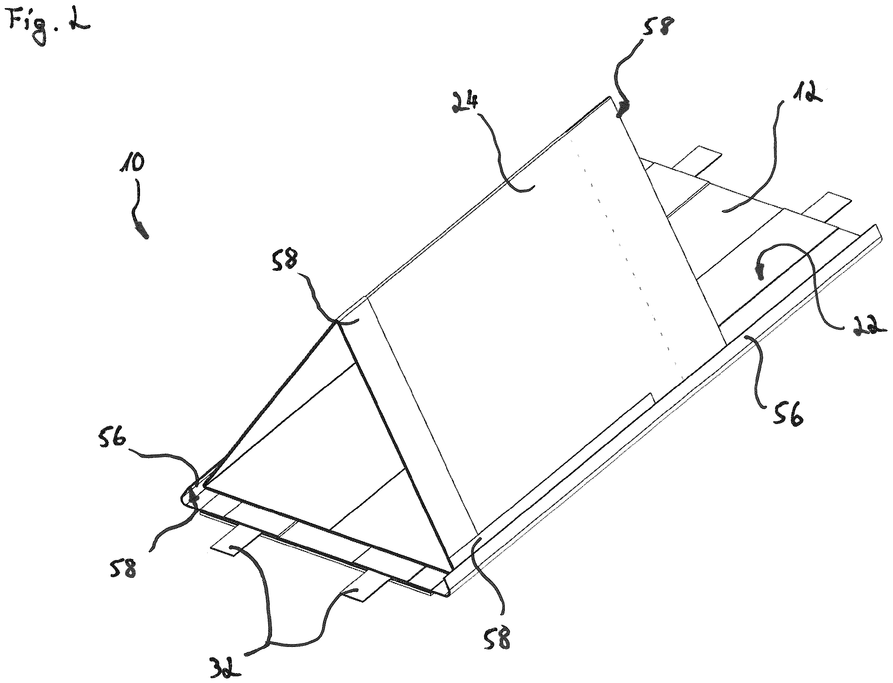

Ein weiterer Abschnitt der Windbrechervorrichtung 10 mit einem weiteren Windwiderstandselement 24 ist in Figur 2 dargestellt. Hier ist außerdem ein größerer Abschnitt der Außenseite 22 der Unterkonstruktion 12 erkennbar, auf der sich die ersten Haltemittel 28 befinden, die in Verbindung mit den zweiten Haltemitteln 30 des Windwiderstandselements 24 die Montage der Windwiderstandselemente 24 auf der Unterkonstruktion 12 ermöglichen. Während in Figur 1 die Gurte des Spanmittels 32 freiliegend dargestellt sind, sind die Gurte in Figur 2 von Folienlagen bedeckt. Bevorzugt sind die Gurte in Umfangsrichtung vollständig von der übrigen Unterkonstruktion 12 (z.B. durch die Folienlagen) umschlossen, wie in Figur 2 dargestellt.

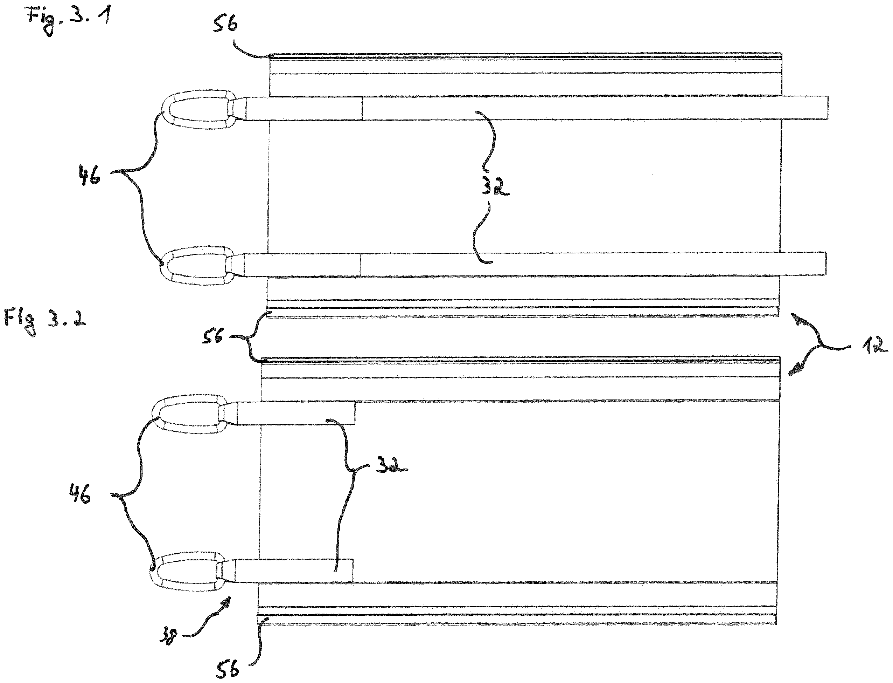

Die Figuren 3.1 und 3.2 zeigen zwei Ausführungsformen der Unterkonstruktion 12. Dabei sind die Gurte des Spannmittels 32 der Anschaulichkeit halber wieder freiliegend dargestellt. In Figur 3.1 ist dabei eine Ausführungsform gezeigt, bei der die Gurte sich über die gesamte Längserstreckung der Unterkonstruktion 12 erstrecken. In Figur 3.2 hingegen ist eine Ausführungsform dargestellt, bei der die Gurte lediglich in einem Endabschnitt 38 der Unterkonstruktion 12 befestigt sind.

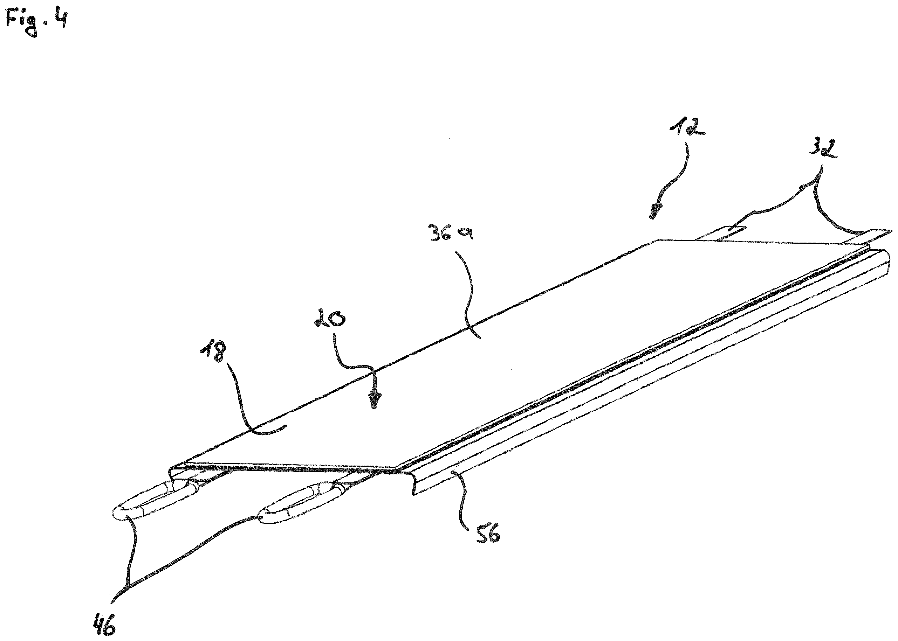

Figur 4 zeigt eine weitere perspektivische Darstellung eines Abschnitts einer Unterkonstruktion. In dieser Darstellung ist besonders die unterste Folienlage 36a der Unterkonstruktion 12 erkennbar. Diese Folienlage ist bevorzugt als EPDM-Platte ausgeführt, um den Reibungskoeffizienten zu einem Turm oder Turmsegmente, auf dem die Unterkonstruktion gespannt wird, zu erhöhen.

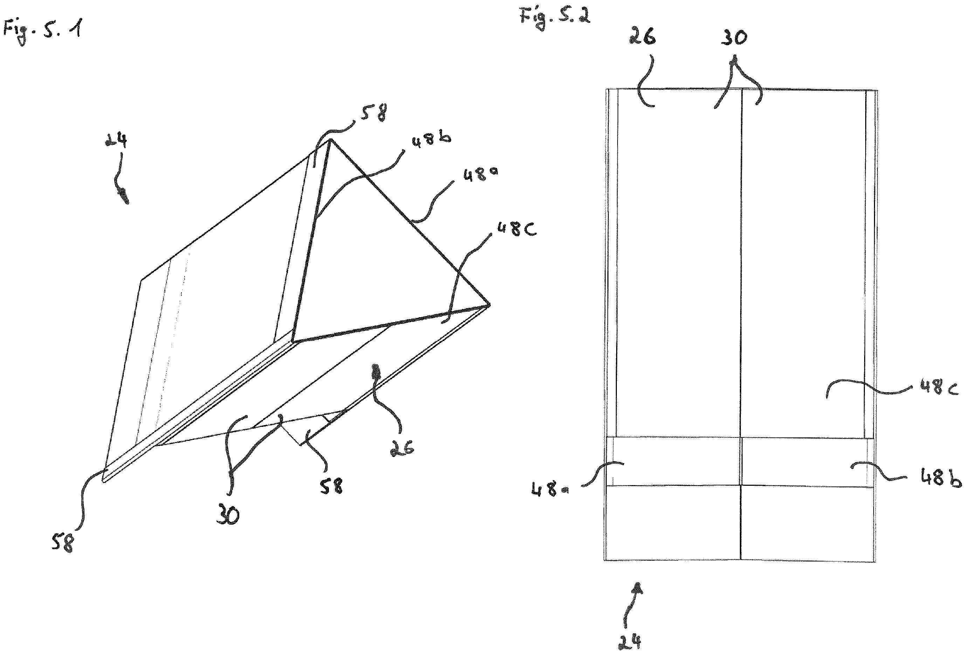

In den Figuren 5.1 und 5.2 sind zwei Perspektiven eines Windwiderstandselements 24 dargestellt. Dabei weist das Windwiderstandselement 24 an der unteren Kante, also links und rechts der Wand 48c jeweils Befestigungsmittel 58 auf, an denen die Überstandsbereiche 56 der Unterkonstruktion 12 befestigt werden können. Diese Befestigungsmittel 58 verlaufen entlang der Längsrichtung des Windwiderstandselements 24. An den jeweiligen Kopfseiten des Windwiderstandselements 24 sind ebenfalls Befestigungsmittel 58 vorgesehen. Diese sind jeweils an den Wänden 48b und 48a vorgesehen. In Figur 5.1 befindet sich das Befestigungsmittel 58 am linken Kopfende des Windwiderstandselements 24 auf der Innenseite der Wände 48a, 48b und am rechten Kopfende des Windwiderstandselements 24 auf der Außenseite der Wände 48a, 48b. Die untere Wand 48c bildet die Haftfläche 26 mit den zweiten Haltemitteln 30 zum Befestigen des Windwiderstandselements 24 auf der Unterkonstruktion 12.

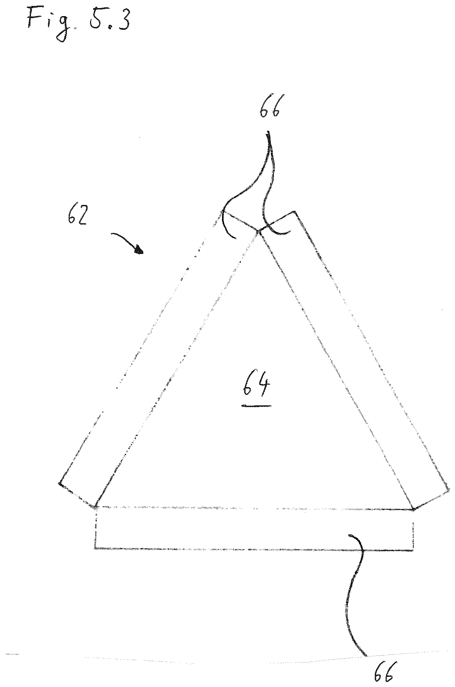

Fig. 5.3 zeigt ein Abdeckelement 62 zum Verschließen eines stirnseitigen Endes eines Windwiderstandselements 24. Ein dreieckförmiger Abdeckabschnitt 64 entspricht in Form und Größe einer Querschnittsfläche des Windwiderstandelements 24 und ist an seinen Rändern mit Befestigungsabschnitten 66 versehen. Jeder Befestigungsabschnitt 66 kann mit einem Befestigungsmittel versehen sein, mit dem er lösbar mit dem Windwiderstandselement 24 gekoppelt werden kann, bspw. einer Klettverschlussverbindung oder einem Reißverschluss.

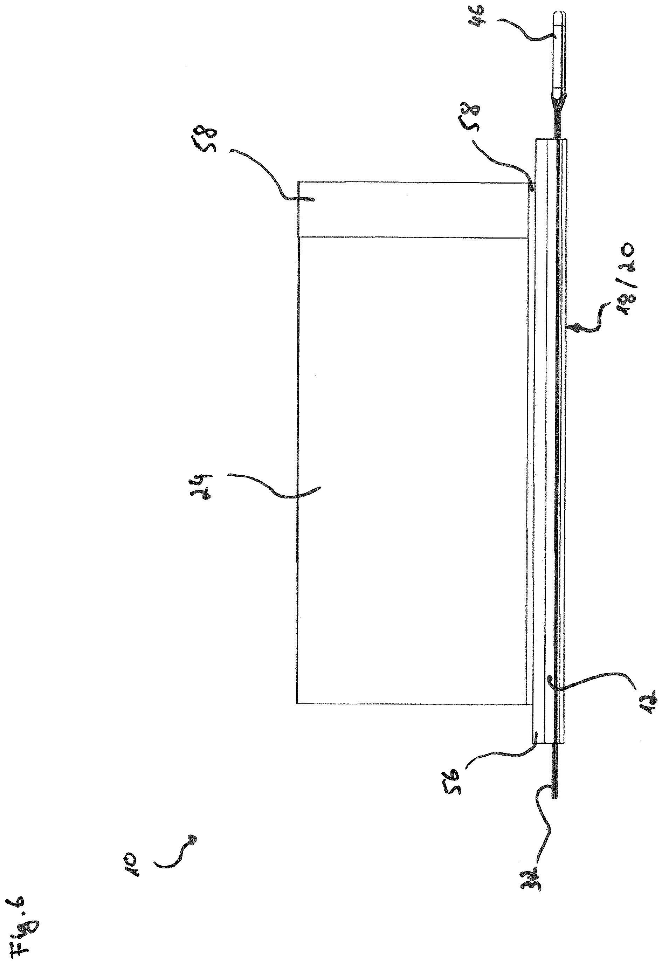

Figur 6 zeigt noch einmal eine seitliche Darstellung eines Endabschnitts eines erfindungsgemäßen Windbrechers.

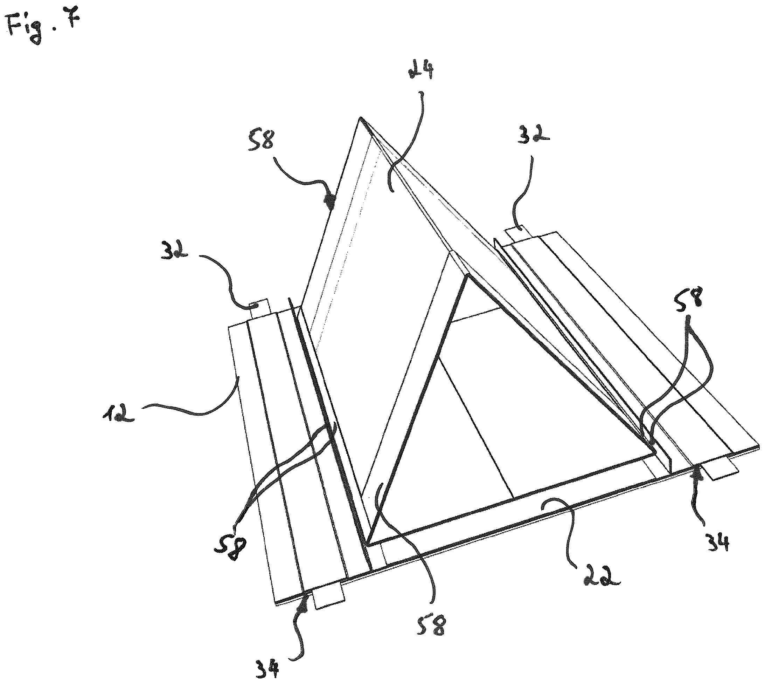

In Figur 7 ist eine weitere Ausführungsform eines erfindungsgemäßen Windbrechers 10 dargestellt. Dabei weist die Unterkonstruktion quer zu ihrer Längsrichtung eine deutlich größere Ausdehnung auf als das darauf montierte Windwiderstandselement 24. Dies ermöglicht es, die Gurte des Spannmittels 32 außerhalb des Bereichs zu führen, der von dem Windwiderstandselement 24 bedeckt ist. Eine solche Ausführungsform bietet den Vorteil, dass das Spannmittel 32 einen guten Schutz gegen Verdrehung des Windbrechers 10 bietet, da die Gurte des Spannmittels 32 einen langen Hebelweg gegenüber einer potenziellen Rotationsachse aufweisen.

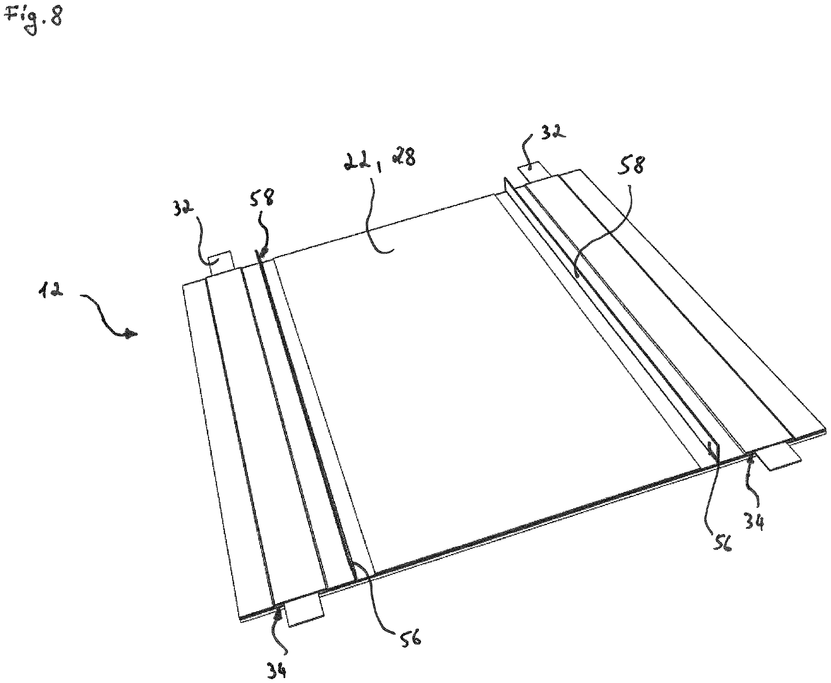

Figur 8 zeigt eine Darstellung eines Abschnitts einer erfindungsgemäßen Unterkonstruktion 12. Dabei sind die Überstandsbereiche 56 erkennbar, die auf ihrer Innenseite Haltemittel 58 aufweisen, die an den Haltemitteln 58 eines Windwiderstandselements 24 befestigt werden können. Zwischen den beiden Überstandsbereichen 56 ist die Außenseite 22 der Unterkonstruktion 12 erkennbar, auf der die ersten Haltemittel 28 angeordnet sind. Wie in der in Figur 7 dargestellten Ausführungsform befinden sich die Gurte des Spannmittels 32 außerhalb des Auflagebereichs des Windwiderstandselements 24. Das Haltemittel 32 verläuft dabei auf der gesamten Länge durch die Unterkonstruktion 12. Dazu weist die Unterkonstruktion 12 Spannmittelaufnahmen 34 auf, in denen das Spannmittel 32 geführt ist. Diese bestehen bevorzugt aus PTFE.

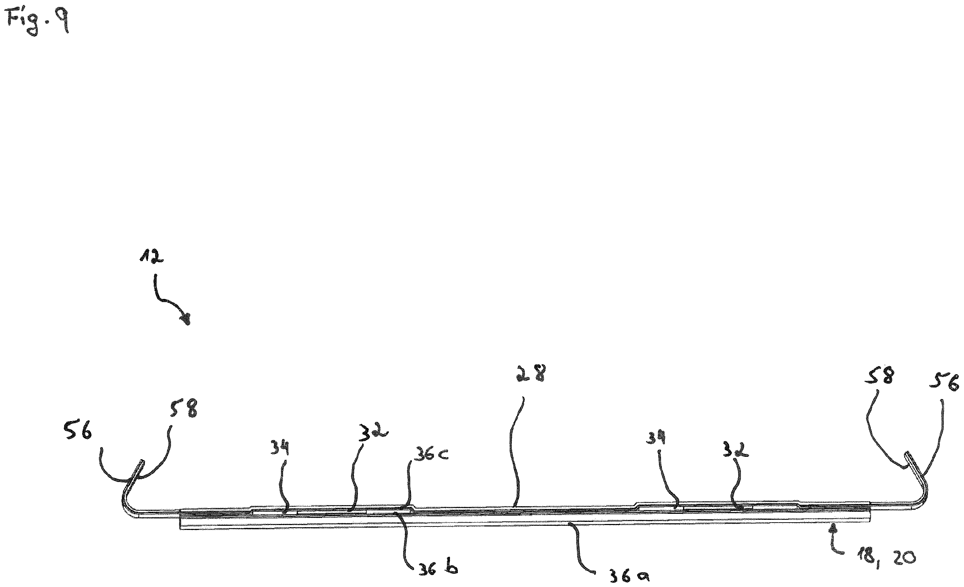

Figur 9 zeigt eine Frontansicht einer Unterkonstruktion 12, wobei in diesem Fall die Gurte des Spannmittels 32 unterhalb des Windwiderstandselements 24 geführt sind. Entsprechend sind auch die Spannmittelaufnahmen 34 unterhalb der Fläche angeordnet, auf der ein Windwiderstandselement 24 montierbar ist und die die ersten Haltemittel 28 aufweist. Die dargestellte Unterkonstruktion 12 umfasst mehrere Folienlagen 36a, 36b, 36c. Die unterste Folienlage 36a ist dabei eine EPDM-Platte, die die Auflageseite 18 mit der Auflagefläche 20 ausbildet. Die Auflagefläche 20 liegt nach der Montage auf der Oberfläche des Turms oder Turmsegments auf. Die Folienlagen 36b und 36c sind jeweils PTFE-Schichten, die dafür sorgen, dass die Gurte des Spannmittels 32 mit geringem Reibwiderstand in der Unterkonstruktion 12 bewegbar sind.

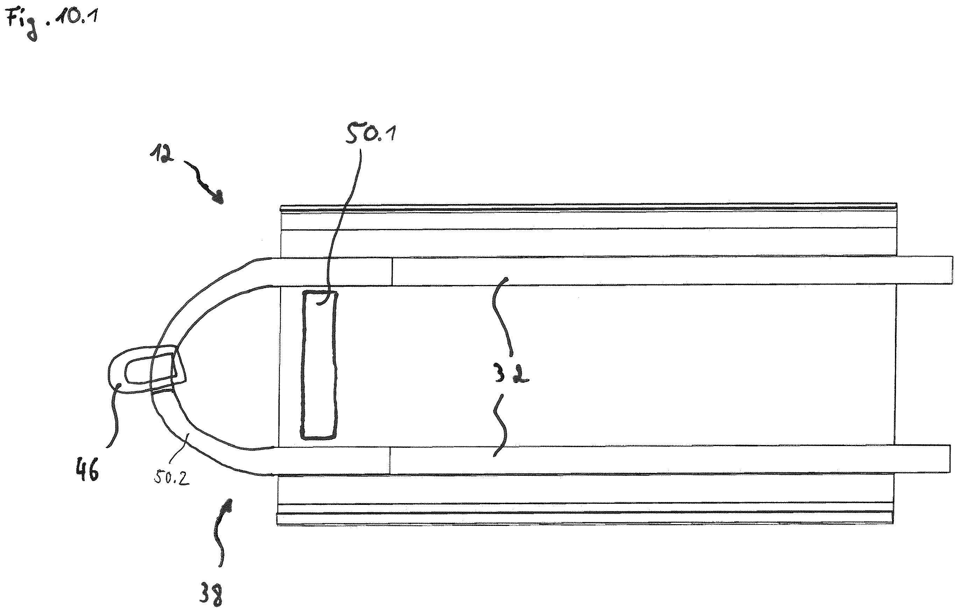

Figur 10.1 stellt eine weitere Ausführungsform der Unterkonstruktion 12 dar, wobei die Enden der Gurte des Spannmittels 32 miteinander verbunden sind, so dass sich eine Schlaufe bildet. An der Schlaufe ist eine Anschlussstelle 46 als Metallöse ausgebildet, so dass beide Gurte des Spannmittels 32 über eine einzige Anschlussstelle auf Zug beanspruchbar sind. Zwischen den beiden Gurten des Spannmittels 32 ist ein Abstandshalter 50.1 dargestellt, damit die Enden der beiden Spannelemente 32 nicht zueinander gezogen werden, wenn die Spannelemente 32 auf einem Turm oder Turmsegment von einem Zugelement gespannt und verspannt werden. So wird die Unterkonstruktion 12 nicht in Querrichtung gestaucht.

Figur 10.1 zeigt weiterhin eine Variante eines Abstandshalters 50.2 in Form eines bogenförmigen, biegesteifen Elements, bspw. aus Faserkunststoff oder Stahl, dessen Enden mit den aus der Unterkonstruktion austretenden Enden der Spannelemente 32 verbunden sind und der wiederum mit der Anschlussstelle 46 verbunden ist, so dass sichergestellt ist, dass die Unterkonstruktion 12 bei Zugbelastung der Spannelemente nicht in Querrichtung gestaucht wird.

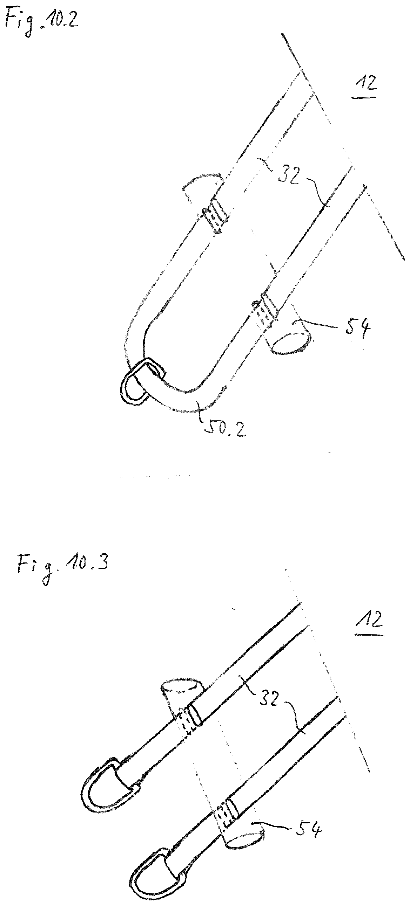

Figur 10.2 und 10.3 zeigen zwei Varianten eines Sicherungselements 54, dessen Aufgabe darin besteht, zu verhindern, dass endseitige Endabschnitte des Spannmittels bzw. der Spannelemente 32 in Aufnahmen in der Unterkonstruktion 12 hineinrutschen, woraus sie schwierig hervorzuziehen wären. Das Sicherungselement besteht in der dargestellten Ausführungsform aus einem quer zur Längsrichtung der Unterkonstruktion 12 angeordneten rohrförmigen Element, das mit Aufnahmeschlitzen zur Durchführung des Spannmittels bzw. der Spannelemente 32 versehen ist, die ihrerseits endseitig entweder mit einem Abstandshalter oder mit Anschlusselementen in Form von Karabinern, Ringen o.ä. versehen sind.

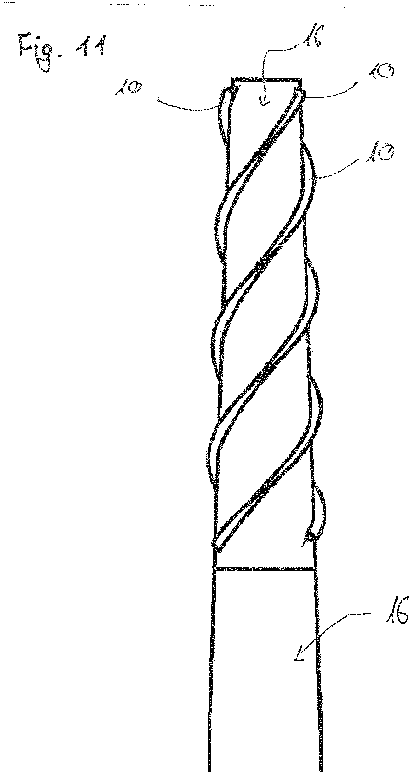

In Figur 11 ist der Turm einer Windturbine dargestellt. Der Turm setzt sich aus zwei Turmsegmenten 16 zusammen. Dabei ist das obere Turmsegment 16 mit drei Windbrechern 10 bestückt, die sich spiralförmig um das Turmsegment 16 winden. Die Anordnung mehrerer, spiralförmig umlaufender Windbrecher 10 bietet die Möglichkeit, windinduzierte Schwingungen oder Vibrationen zu verringern, unabhängig davon aus welcher Richtung das Turmsegment 16 vom Wind angeströmt wird.

### Bezugszeichenliste

- 10: Windbrecher
- 12: Spanneinrichtung (Unterkonstruktion)
- 14: Oberfläche
- 16: Turm/Turmsegment
- 18: Auflageseite
- 20: Auflagefläche
- 22: Außenseite
- 24: Windwiderstandselement
- 26: Haftfläche
- 28: erste Haltemittel
- 30: zweite Haltemittel
- 32: Spannmittel (Spannelemente)
- 34: Spannmittelaufnahme
- 36a, 36b, 36c: Folienlagen
- 38: Endabschnitt
- 46: Anschlussstelle
- 48a, 48b, 48c: Wände
- 50.1, 50.2: Abstandshalter
- 52: Folienlage
- 54: Sicherungselement
- 56: Überstandsbereiche
- 58: Befestigungsmittel
- 60: Nahtstelle
- 62: Abdeckelement
- 64: Abdeckabschnitt
- 66: Befestigungsabschnitt

## Patentansprüche

1. Windbrecher (10) zum Reduzieren von windinduzierten Vibrationen oder Schwingungen beim Transport oder Aufstellen eines Turms oder Turmsegments von Windturbinen, aufweisend
eine Unterkonstruktion (12), die gegen eine Oberfläche (14) eines Turms oder Turmsegments (16) spannbar ist und eine Auflageseite (18) mit einer Auflagefläche (20) zum Aufliegen auf der Oberfläche des Turms oder Turmsegments (16) und eine der Auflageseite (18) gegenüberliegende Außenseite (22) aufweist,
und zumindest ein Windwiderstandselement (24), zum Beeinflussen einer Windströmung an dem Turm oder Turmsegment (16),
**dadurch gekennzeichnet, dass** das Windwiderstandselement (24) mit der Außenseite der Unterkonstruktion (12) in Kontakt bringbar ist und mit der Unterkonstruktion (12) lösbar verbindbar ist.

2. Windbrecher nach Anspruch 1, **dadurch gekennzeichnet, dass** die Auflageseite (18) im Bereich der Auflagefläche (20) Kunststoff, Silikon, Gummi oder Ethylen-Propylen-Dien- Kautschuk (EPDM) umfasst.

3. Windbrecher nach einem der vorhergehenden Ansprüche, **dadurch gekennzeichnet, dass** das Windwiderstandselement (24) eine Haftfläche (26) aufweist, mittels der das Windwiderstandselement (24) in Kontakt mit der Außenseite (22) der Unterkonstruktion (12) bringbar und mit der Unterkonstruktion (12) verbindbar ist.

4. Windbrecher nach einem der vorhergehenden Ansprüche, **dadurch gekennzeichnet, dass** das Windwiderstandselement (24) kraftschlüssig und/oder formschlüssig mit der Unterkonstruktion (12) verbindbar ist.

5. Windbrecher nach einem der vorhergehenden Ansprüche, **dadurch gekennzeichnet, dass** die Unterkonstruktion (12) erste Haltemittel (28) aufweist und das Windwiderstandselement (24) zweite Haltemittel (30) aufweist, wobei die zweiten Haltemittel (30) und die ersten Haltemittel (28) miteinander in Eingriff bringbar sind, um eine lösbare Verbindung zwischen dem Windwiderstandselement (24) und der Unterkonstruktion (12) herzustellen.

6. Windbrecher nach einem der vorhergehenden Ansprüche, **dadurch gekennzeichnet, dass** die Unterkonstruktion (12) ein Spannmittel (32) umfasst, mit dem die Unterkonstruktion (12) entlang ihrer Längsrichtung auf Zug beanspruchbar ist, um die Auflagefläche (20) gegen die Oberfläche des Turms oder Turmsegments (16) zu pressen.

7. Windbrecher nach Anspruch 6, **dadurch gekennzeichnet, dass** die Unterkonstruktion ein Abspannmittel umfasst, mittels dem eine Abspannkraft auf die Unterkonstruktion aufbringbar ist, die der mittels der Spannmittel aufgebrachten Zugkraft in einem Abschnitt der Unterkonstruktion vor oder hinter dem Abspannmittel entgegenwirkt.

8. Windbrecher nach einem der vorangehenden Ansprüche, **dadurch gekennzeichnet, dass** die Unterkonstruktion (12) aus zumindest drei Lagen (36a, 36b, 36c) besteht, wobei zumindest zwei der Lagen PTFE aufweisen und zumindest eine Lage Kunststoff, Silikon, Gummi oder EPDM aufweist.

9. Windbrecher nach einem der vorhergehenden Ansprüche **dadurch gekennzeichnet, dass** zwei benachbarte Windwiderstandselemente (24), die auf der Unterkonstruktion (12) befestigt sind, untereinander durch Klettverschlüsse, Reißverschlüsse oder Haken-Ösen-Verbindungen verbindbar sind.

10. Windbrecher nach einem der vorhergehenden Ansprüche, **dadurch gekennzeichnet, dass** das Windwiderstandselement (24) faltbar ist.

11. Windbrecher nach einem der vorhergehenden Ansprüche, **dadurch gekennzeichnet, dass** das Windwiderstandelement (24) zumindest zwei oder drei Wände (48a, 48b, 48c) umfasst, die sich entlang einer Längsrichtung des Windwiderstandelements erstrecken, wobei das Windwiderstandselement so auf der Unterkonstruktion (12) positionierbar ist, dass dessen Längsrichtung im Wesentlichen parallel zur Längsrichtung der Unterkonstruktion (12) angeordnet ist.

12. Windbrecher nach Anspruch 11 **dadurch gekennzeichnet, dass** zwischen zwei Wänden (48a, 48b) des Windwiderstandelements (24) ein Abstandhalter (50) angeordnet ist.

13. Windbrecher nach einem der vorhergehenden Ansprüche, **dadurch gekennzeichnet, dass** das Windwiderstandelement (24) aus zumindest zwei Lagen Folie besteht, wobei zwischen den Folienlagen ein Stabilisierungselement angeordnet ist.

14. Windbrecher nach einem der vorhergehenden Ansprüche, **dadurch gekennzeichnet, dass** die Unterkonstruktion (12) Überstandsbereiche (56) aufweist, die parallel zur Längsrichtung der Unterkonstruktion (12) verlaufen und an beiden Seiten zu der Längsrichtung der Unterkonstruktion (12) über die Fläche hinaus stehen, die von dem Windwiderstandselement (24) bedeckt ist, wenn das Windwiderstandselement (24) auf der Unterkonstruktion (12) befestigt ist, und die gegen das Windwiderstandselement (24) klappbar sind und über Befestigungsmittel (58), zum Beispiel Klettverschluss, an dem Windwiderstandselement (24) befestigbar sind.

15. Turm oder Turmsegmente einer Windturbine umfassend einen Windbrecher oder ein Windbrechersystem nach einem der vorangehenden Ansprüche.

## Claims

1. Windbreaker (10) for reducing wind-induced vibrations or oscillations during the transportation or erection of a tower or tower segment of wind turbines, comprising
a substructure (12) that can be stretched over a surface (14) of a tower or tower segment (16) and a bearing face (18) with a bearing surface (20) for resting on the surface of the tower or tower segment (16) and an outer face (22) opposite the bearing face (18),
and at least one wind resistance element (24) for influencing a wind flow at the tower or tower segment (16),
**characterised in that** the wind resistance element (24) can be brought into contact with the outer face of the substructure (12) and can be detachably connected to the substructure (12).

2. Windbreaker according to claim 1, **characterised in that** in the area of the bearing surface (20), the bearing face (18) comprises synthetic material, silicone, rubber or ethylene propylene diene monomer rubber (EPDM).

3. Windbreaker according to one of the preceding claims, **characterised in that** the wind resistance element (24) has an adhesive surface (26), by means of which the wind resistance element (24) can be brought into contact with the outer face (22) of the substructure (12) and can be connected to the substructure (12).

4. Windbreaker according to one of the preceding claims, **characterised in that** the wind resistance element (24) can be connected to the substructure (12) in a non-positive and/or form-fitting manner.

5. Windbreaker according to one of the preceding claims, **characterised in that** the substructure (12) has first holding elements (28) and the wind resistance element (24) has second holding elements (30), wherein the second holding elements (30) and the first holding elements (28) can be brought to engage with one another in order to produce a releasable connection between the wind resistance element (24) and the substructure (12).

6. Windbreaker according to one of the preceding claims, **characterised in that** the substructure (12) comprises a tensioning element (32) with which the substructure (12) can be tensioned along its longitudinal direction, in order to press the bearing surface (20) against the surface of the tower or tower segment (16).

7. Windbreaker according to claim 6, **characterised in that** the substructure comprises a bracing element by means of which a bracing force can be applied to the substructure, which counteracts the tensile force applied by means of the tensioning element in a section of the substructure in front of or behind the bracing element.

8. Windbreaker according to one of the preceding claims, **characterised in that** the substructure (12) consists of at least three layers (36a, 36b, 36c), wherein at least two of the layers comprise PTFE and at least one layer comprises synthetic material, silicone, rubber or EPDM.

9. Windbreaker according to one of the preceding claims, **characterised in that** two adjacent wind resistance elements (24) that are fastened to the substructure (12) can be connected to one another by means of hook-and-loop fasteners, zips or hook-and-eye fasteners.

10. Windbreaker according to one of the preceding claims, **characterised in that** the wind resistance element (24) can be folded.

11. Windbreaker according to one of the preceding claims, **characterised in that** the wind resistance element (24) comprises at least two or three walls (48a, 48b, 48c) that extend along a longitudinal direction of the wind resistance element, wherein the wind resistance element can be positioned on the substructure (12) such that its longitudinal direction is arranged essentially parallel to the longitudinal direction of the substructure (12).

12. Windbreaker according to claim 11, **characterised in that** a spacer (50) is arranged between two walls (48a, 48b) of the wind resistance element (24).

13. Windbreaker according to one of the preceding claims, **characterised in that** the wind resistance element (24) consists of at least two layers of foil, wherein a stabilising element is arranged between the layers of foil.

14. Windbreaker according to one of the preceding claims, **characterised in that** the substructure (12) has protruding areas (56) which run parallel to the longitudinal direction of the substructure (12), and at both sides of the longitudinal direction of the substructure (12) protrude beyond the surface that is covered by the wind resistance element (24) when the wind resistance element (24) is fastened on to the substructure (12), and which can be folded against the wind resistance element (24) and can be fastened to the wind resistance element (24) by means of fastening elements (58), for example hook-and-loop fasteners.

15. Tower or tower segments of a wind turbine comprising a windbreaker or a windbreaker system according to one of the preceding claims.

## Revendications

1. Coupe-vent (10) ayant pour but de réduire les vibrations ou oscillations produites par le vent durant le transport ou l'assemblage d'une tour ou d'un segment de tour d'éoliennes et composé des éléments suivants :
une sous-structure (12) qui peut s'étirer sur une surface (14) d'une tour ou d'un segment de tour (16) et une face d'appui (18) qui comporte une surface portante (20) qui repose contre la surface de la tour ou du segment de tour (16) et une face externe (22) qui fait face à la face d'appui (18)
et au moins un élément de résistance au vent (24) qui influence le flux de vent au niveau de cette tour ou de ce segment de tour (16)
et **se caractérisant par le fait que** l'élément de résistance au vent (24) peut être mis au contact de la face externe de la sous-structure (12) et peut se raccorder à la sous-structure (12) ou s'en détacher.

2. Le coupe-vent que décrit la revendication 1, si ce n'est que, dans la zone occupée par la surface portante (20), la face d'appui (18) se compose d'un matériau synthétique, de silicone, de caoutchouc ou de caoutchouc synthétique EPDM (éthylène propylène diène monomère).

3. Le coupe-vent que décrit l'une ou l'autre des revendications précédentes, si ce n'est que l'élément de résistance au vent (24) a une surface adhésive (26) qui permet à l'élément de résistance au vent (24) de rester au contact de la face externe (22) de la sous-structure (12) et de se rattacher à cette sous-structure (12).

4. Le coupe-vent que décrit l'une ou l'autre des revendications précédentes, si ce n'est que l'élément de résistance au vent (24) peut se rattacher à la sous-structure (12) d'une manière qui n'est pas positive et (ou) qui épouse le profil.

5. Le coupe-vent que décrit l'une ou l'autre des revendications précédentes, si ce n'est que la sous-structure (12) a les premiers éléments de maintien (28) et que l'élément de résistance au vent (24) a les deuxièmes éléments de maintien (30), et si ce n'est que les deuxièmes éléments de maintien (30) et les premiers éléments de maintien (28) peuvent être positionnés de manière à s'engrener afin de créer une connexion détachable entre l'élément de résistance au vent (24) et la sous-structure (12).

6. Le coupe-vent que décrit l'une ou l'autre des revendications précédentes, si ce n'est que la sous-structure (12) comporte un élément de tension (32) qui permet de tendre la sous-structure (12) dans son sens longitudinal, de manière à appuyer la surface portante (20) contre la surface de la tour ou d'un segment de tour (16).

7. Le coupe-vent que décrit la revendication 6, si ce n'est que la sous-structure comporte un élément de renforcement qui permet d'appliquer une force de contreventement à la sous-structure, force qui vient contrer la force de traction qui s'applique, par l'intermédiaire de l'élément de tension, à une section de la sous-structure qui se situe devant ou derrière l'élément de renforcement.

8. Le coupe-vent que décrit l'une ou l'autre des revendications précédentes, si ce n'est que la sous-structure (12) comporte au moins trois couches (36a, 36b, 36c), et si ce n'est qu'au moins deux de ces couches contiennent du PTFE et au moins une couche contient un matériau synthétique, du silicone, du caoutchouc ou de l'EPDM.

9. Le coupe-vent que décrit l'une ou l'autre des revendications précédentes, si ce n'est que deux éléments adjacents de résistance au vent (24), qui viennent se fixer à la sous-structure (12), peuvent être reliés l'un à l'autre par l'entremise de fixations composées d'un crochet et de boucles, de fermetures éclair ou d'attaches à crochets et œillets.

10. Le coupe-vent que décrit l'une ou l'autre des revendications précédentes, si ce n'est que l'élément de résistance au vent (24) peut se replier.

11. Le coupe-vent que décrit l'une ou l'autre des revendications précédentes, si ce n'est que l'élément de résistance au vent (24) comporte au moins deux ou trois cloisons (48a, 48b, 48c) qui viennent se positionner dans le sens longitudinal de l'élément de résistance au vent, et si ce n'est que cet élément de résistance au vent peut se placer sur la sous-structure (12) de telle sorte que son sens longitudinal est essentiellement parallèle au sens longitudinal de la sous-structure (12).

12. Le coupe-vent que décrit la revendication 11, si ce n'est qu'une entretoise (50) vient s'insérer entre deux cloisons (48a, 48b) de l'élément de résistance au vent (24).

13. Le coupe-vent que décrit l'une ou l'autre des revendications précédentes, si ce n'est que l'élément de résistance au vent (24) comporte au moins deux couches de feuillard, et ce n'est qu'un élément stabilisateur vient s'insérer entre ces couches de feuillard.

14. Le coupe-vent que décrit l'une ou l'autre des revendications précédentes, si ce n'est que la sous-structure (12) a des zones saillantes (56) qui sont parallèles au sens longitudinal de la sous-structure (12) et les deux côtés du sens longitudinal de la sous-structure (12) font saillie au-delà de la surface qui est recouverte par l'élément de résistance au vent (24) lorsque cet élément de résistance au vent (24) est rattaché à la sous-structure (12), et qui peuvent se replier contre l'élément de résistance au vent (24) et peuvent se rattacher à l'élément de résistance au vent (24) par l'entremise d'éléments de fixation (58) comme, par exemple, des attaches à crochets et boucles.

15. La tour ou les segments de tour d'une éolienne comportant un coupe-vent ou un système coupe-vent, conformément aux descriptions faites dans l'une ou l'autre des revendications précédentes.
